(19) Europäisches Patentamt
European Patent Office
Office européen des brevets

(11) Veröffentlichungsnummer: **0 159 503**
**B1**

(12) # EUROPÄISCHE PATENTSCHRIFT

(45) Veröffentlichungstag der Patentschrift: **26.10.88**

(51) Int. Cl.[4]: **C 08 J 7/04,** B 05 D 5/04, C 08 G 63/68, B 41 M 1/30

(21) Anmeldenummer: **85102576.7**

(22) Anmeldetag: **07.03.85**

(54) **Mit Phosphor enthaltendem Polyester haftvermittelnd vorbeschichtete Polyesterfolie.**

(30) Priorität: **16.03.84 US 590399**

(43) Veröffentlichungstag der Anmeldung: **30.10.85 Patentblatt 85/44**

(45) Bekanntmachung des Hinweises auf die Patenterteilung: **26.10.88 Patentblatt 88/43**

(84) Benannte Vertragsstaaten: **BE DE FR GB LU NL**

(56) Entgegenhaltungen:
**EP - A - 0 029 620**
**FR - A - 2 395 528**
**US - A - 4 098 741**

(73) Patentinhaber: **HOECHST CELANESE CORPORATION, Route 202-206 North, Somerville, N.J. 08876 (US)**

(72) Erfinder: **Caines, Scott, R., 108 Ashmore Road, Greer South Carolina 29651 (US)**

(74) Vertreter: **Euler, Kurt Emil, Dr., HOECHST AG - Werk KALLE Patentabteilung Postfach 3540 Rheingaustrasse 190, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung bezieht sich auf eine orientierte selbsttragende Folie aus einem ersten thermoplastischen Polyester mit einer ein- oder beidseitig aufgebrachten Haftvermittlerschicht, bei der die Haftvermittlerschicht eine Schichtdicke aufweist entsprechend einem Trockengewicht im Bereich zwischen 0,0098 und 0,059 $g/m^2$.

Orientierte Polyesterfolie, insbesondere biaxial orientierte Folie aus Polyethylenterephthalat (PET), wird in grossem Umfang als Verpackungs- und Ettikettierungsmaterial für verschiedenartige Produkte, u.a. auch für Lebensmittel, verwendet.

Da die Oberfläche von orientierter PET-Folie hydrophob ist, lässt sie sich nicht leicht beschichten oder bedrucken. Für viele Verpackungs- und Etikettierungszwecke sollte die Folie jedoch für normale Flexodruck- und Tiefdruckfarben aufnahmefähig sein.

Man hat versucht, diesem Mangel abzuhelfen, indem man Spezialfarben entwickelt hat, die unmittelbar auf der Oberfläche von PET-Folien haften. Viele dieser Farben haben allerdings Rezepturen auf der Basis von organischen Lösemitteln, harzartigen Bindemitteln und anderen Bestandteilen, die teuer und schwierig zu verarbeiten sind und deren Einsatz zu Gefahren führen kann.

Eine weitere Möglichkeit zur Verbesserung der Bedruckbarkeit von PET-Folie besteht darin, dass man eine Haftvermittlerbeschichtung aufbringt, die sowohl auf der Folie haftet als auch Druckfarben annimmt. Solche Haftvermittlerbeschichtungen bestehen z.B. aus Polymermassen auf Basis von Vinylidenchlorid-Terpolymerisaten, wie sie in US-A-2 698 240 beschrieben sind, oder aus den aus US-A-4 252 885 bekannten, in Wasser dispergierbaren Copolyestergrundierungen. Beim Aufbringen von Haftvermittlerbeschichtungen zur Verbesserung der Druckfarbenhaftung auf PET-Folie ergibt sich jedoch ein Problem daraus, dass die Folie in vielen Fällen als Verpackungsmaterial für Lebensmittel eingesetzt wird, wobei die relative Toxizität der Haftvermittlerschicht eine Rolle spielt. Polyesterfolie an sich wird zwar von den meisten Behörden, u.a. auch vom US-Gesundheitsamt (U.S. Food and Drug Administration), als Verpackungsmaterial für Lebensmittel zugelassen, doch bei mit bestimmten polymeren Haftvermittlerbeschichtungen wie z.B. Acrylharzderivaten, Polymeren mit einem Gehalt an Vinylidenchlorid und zahlreichen ähnlichen Haftvermittlern versehener Polyesterfolie ergeben sich Probleme bezüglich der Toxizität, da solche Haftvermittler möglicherweise in die Lebensmittel diffundieren könnten, mit denen sie in Berührung kommen.

Ein weiteres Problem ist ferner die schlechte Regenerierbarkeit dieser beschichteten Folien.

Aus US-A-4 252 885 und US-A-4 304 851 ist es bekannt, zur Herstellung lichtempfindlicher photographischer Filme Polyesterfolie mit freie Säuregruppen enthaltenden wässrigen Polyester- oder Copolyesterdispersionen zu beschichten. GB-A-1 465 496 beschreibt das Beschichten von Polyesterfolien mit antistatischen Mattiermassen aus einem Polymeren oder Copolymeren, wodurch die Druckfarbenannahme verbessert werden soll. Es ist auch bekannt, das Druckverhalten von Polyesterfolien dadurch zu verbessern, dass man die Folie mit einer stabilen Polyestergrundschicht und einer Deckschicht, bestehend aus einem Acryl- oder Methacrylpolymeren oder -copolymeren, in einer flüchtigen Flüssigkeit behandelt, wie es in GB-A-1 572 345 beschrieben ist. Gemäss GB-A-1 371 855 wird die Druckfarbenannahme einer Polyesterfolie dadurch verbessert, dass man sie mit einer Haftvermittlerschicht aus einem copolymerisierten Kondensationsharz beschichtet, das abgeleitet ist von einem Monoaldehyd, 5 bis 25 Gew.-% des Copolymeren aus Acrylamid oder Methacrylamid und mindestens einem weiteren ungesättigten Monomeren, wobei die Kondensation in Anwesenheit eines Alkanols mit 1 bis 6 C-Atomen stattfindet. Aus EP-A-0 029 620 ist eine PET-Haftvermittlerschicht bekannt, die auf einer wässrigen Dispersion des Kondensationsprodukts von Ethylenglykol und einer Mischung aus Terephthalsäure, Isophthalsäure und einem Salz der Sulfoisophthalsäure basiert und zur Verbesserung der Haftung von lichtempfindlichen Schichten auf Gelatinebasis geeignet ist.

Keine dieser Vorveröffentlichungen befasst sich jedoch in vollem Umfang zufriedenstellend mit dem Problem der Verbesserung der Bedruckbarkeit von Polyesterfolie bzw. mit der Lösung dieses Problems durch die hier beschriebene Verfahrensweise.

Die vorliegende Erfindung hat es sich deshalb zur Aufgabe gemacht, eine orientierte, selbsttragende Polyesterfolie mit verbesserter Aufnahmefähigkeit für Flexo- oder Tiefdruckfarben zu schaffen.

Ferner soll eine Haftvermittlerbeschichtung für orientierte Polyesterfolie vorgeschlagen werden, die während der Folienherstellung gefahrlos und leicht aufgebracht werden kann.

Insbesondere soll ein Haftvermittler für biaxial orientierte Polyethylenterephthalatfolie bereitgestellt werden, der bewirkt, dass eine solche Folie Flexo- oder Tiefdruckfarben für Verpackungszwecke allgemein annimmt, und der darüber hinaus lebensmittelrechtlich unbedenklich ist, so dass die Folie auch für die Verpackung von Lebensmitteln eingesetzt werden kann.

Die vorstehend genannte Aufgabe wird durch eine haftvermittelnd vorbeschichtete orientierte Polyesterfolie der eingangs genannten Gattung gelöst, die dadurch gekennzeichnet ist, dass die Haftvermittlerschicht einen zweiten Polyester enthält, der ein Kondensationsprodukt ist aus:

a) einer Dicarbonsäurekomponente aus Isophthalsäure, einem entsprechenden niederen Alkylester, Acylhalogenid und/oder Mischungen davon oder der genannten Dicarbonsäurekomponente, gegebenenfalls im Gemisch mit bis zu gleichen molaren Anteilen von

i) mindestens einer aliphatischen Dicarbonsäure der Formel HOOC $(CH_2)_n$ COOH, wobei n zwischen 1 und 11 liegt, einem entsprechenden Säureanhydrid oder niederem Alkylester oder Acylhalogenid und/oder Mischungen davon oder

ii) mindestens einer weiteren aromatischen Dicarbonsäure, einem entsprechenden Säureanhydrid oder niederem Alkylester oder Acylhalogenid oder

iii) Mischungen aus i) und ii) und

b) mindestens einem Diol oder Polyoxyalkylenglykol mit 2 bis 11 C-Atomen und

c) einer Phosphor enthaltenden Säurekomponente.

Dieser zweite Polyester ist fest, hat eine verzweigte Struktur und enthält wiederkehrende Carbonyl-oxyeinheiten und Phosphateinheiten, wobei jede dieser Einheiten ein integraler Bestandteil der Polyesterkette des zweiten Polyesters ist. Der zweite Polyester hat insbesondere eine Carbonsäurezahl von 5 bis 15 und ein Molgewicht von 4 000 bis 11 000.

Die Basisfolie aus orientiertem Polyester besteht bevorzugt aus Polyethylenterephthalat. Die Erfindung lässt sich jedoch ebenso auf Folien auf Basis eines kristallisierbaren Polyesters aus der Polykondensation eines Glykols, z.B. Ethylenglykol oder Butandiol bzw. deren Gemische, mit Terephthalsäure oder Mischungen von Terephthalsäure und anderen Dicarbonsäuren wie z.B. Isophthalsäure, Diphensäure und Sebacinsäure oder deren polyesterbildende Äquivalente anwenden. Solche Polyester werden nach bekannten Verfahren hergestellt. Die Folie kann gleichfalls nach bekannten Verfahren und mit bekannten Vorrichtungen hergestellt werden.

Es wird zum Beispiel eine Polyesterschmelze hergestellt und zu einer amorphen Folie auf eine polierte, rotierende Giesstrommel extrudiert, wo sich eine gegossene Folie aus dem Polymeren ausbildet. Anschliessend wird die Folie axial gestreckt, und zwar bei einer monoaxial orientierten Folie lediglich in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Der erste an der gegossenen Folie durchgeführte Streckschritt kann beliebig in einer der beiden rechtwinklig zueinander verlaufenden Richtungen erfolgen. Um der Folie Festigkeit und Zähigkeit zu verleihen, kann etwa um das 3,0- bis 5,0fache der ursprünglichen Abmessungen der gegossenen Folie in einer oder beiden Richtungen gestreckt werden. Der Verstreckungsgrad liegt vorzugsweise etwa zwischen dem 3,2- und 4,2fachen der ursprünglichen Abmessungen.

Während der Streckschritte liegen die Temperaturen im Bereich zwischen der Glasübergangstemperatur bis unterhalb der Temperatur, bei der das Polymere weich wird und schmilzt.

Falls gewünscht, wird nach dem Strecken für die zur Kristallisation der Polyesterfolie erforderliche Dauer wärmebehandelt. Durch die Kristallisation werden die mechanischen und thermischen Eigenschaften der Folie fixiert, Polyethylenterephthalat wird z.B. bei einer Temperatur im Bereich von etwa 190 °C bis 240 °C, vorzugsweise von etwa 215 °C bis 235 °C, wärmebehandelt.

Die erfindungsgemässe Haftvermittlerbeschichtung mit Phosphor enthaltendem Polyester wird vorzugsweise während einer der folgenden zwei Stufen der Folienherstellung in-line aufgebracht: der dem Strecken vorausgehenden Stufe, d.h. zwischen dem Giessen der amorphen Folie und dem ersten Streckschritt, wie es z.B. in GB-A-1 411 564 beschrieben ist, oder der Streckzwischenstufe, d.h. nach dem uniaxialen, aber vor dem biaxialen Strecken, z.B. gemäss US-A-4 215 035. Normalerweise ist die Wärme, mit der die Folie beim Strecken oder den abschliessenden Konditionierstufen beaufschlagt wird, ausreichend, um die Haftvermittlerbeschichtung zu trocknen.

In einer bevorzugten Ausführung wird die Haftvermittlerbeschichtung nach dem uniaxialen Strecken, d.h. nach dem Strecken der Folie in Längsrichtung, jedoch vor dem Strecken in der rechtwinklig dazu verlaufenden Richtung, aufgebracht. In dieser bevorzugten Ausführung wird die Folie nach dem Längsstrecken nach einem der bekannten Verfahren beschichtet. Das Beschichten kann zum Beispiel mit Walzen, durch Aufsprühen, mit Schlitzdüsen oder durch Tauchen erfolgen. In einer bevorzugten Ausführung wird die Polyesterfolie mit Gravurwalzen beschichtet. Die uniaxial gestreckte Folie kann ferner vor dem Beschichten in bekannter Weise mit einem Corona-Entladegerät coronabehandelt werden. Die Coronabehandlung vermindert die Hydrophobie der Polyesterfolienoberfläche, wodurch die Beschichtung die Oberfläche leichter benetzen kann und somit die Haftung der Beschichtung an der Oberfläche verbessert wird.

Wie bereits erwähnt bilden Polyester aus einem Phosphor enthaltenden Polymeren mit verzweigter Kette, welches das Reaktionsprodukt aus mindestens einer Dicarbonsäurekomponente, mindestens einem Diol der Polyoxyalkylenglykol und einer Phosphor enthaltenden Säurekomponente ist, Haftvermittlerschichten für PET-Folie, die die Druckfarbenhaftung wirksam verbessern.

Für die Herstellung der erfindungsgemässen haftvermittelnden Polyesterbeschichtungsmasse wird eine aromatische, aliphatische oder cycloaliphatische Dicarbonsäurekomponente eingesetzt, zum Beispiel Dicarbonsäuren und -ester, die entsprechenden Acylhalogenide oder, sofern vorhanden, die entsprechenden Anhydride oder Mischungen davon. Geeignete Säureanhydride sind zum Beispiel Phthalsäure- und Maleinsäureanhydrid. Als Dicarbonsäure können zum Beispiel verwendet werden: Phthal-, Terephthal-, Isophthal-, Oxal-, Malon-, Bernstein-, Glutar-, 2,2-Dimethylglutar-, Adipin-, Pimelin-, Azelain-, Sebacin-, Malein-, Itacon-, Fumar-, 1,3-Cyclopentandicarbon-, 1,2-Cyclohexandicarbon-, 1,3-Cyclohexandicarbon-, 1,4-Cyclohexandicarbon-, 2,5-Norbornandicarbon-, 1,4-Naphthalindicarbon-, Diphen-, Diphenylether-4,4′-dicarbonsäure, Diphenylsulfon-4,4′-dicarbonsäure, Dimethylether-1,1′-dicarbonsäure, Diethylthioether-2,2′-dicarbonsäure und 2,5-Naphthalindicarbonsäure. Dabei werden die aromatischen Dicarbonsäuren, wie zum Beispiel Isophthal- oder Terephthalsäure, bevorzugt, da sie bei Polyestern bekanntlich zur Filmfestigkeit beitragen. Um gewünschte Veränderungen der physikalischen Eigenschaften der erfindungsgemässen haftvermittelnden Polyesterbeschichtungsmasse zu erreichen, kann man, wie bekannt, auch geeignete Mischungen dieser Dicarbonsäuren einsetzen. Bei der Herstellung der neuen haftvermittelnden Polyesterbeschichtungsmassen nach dieser Erfindung können auch die entsprechenden Ester und Acylhalogenide der oben aufgeführten Dicarbonsäuren verwendet werden. Zu den Estern zählen zum Beispiel Dimethyl-1,4-cyclohexandicarboxlat, Dimethyl-2,6-naphthalindicarboxylat, Diphenylsulfon-4,4′-dicarbonsäurebutylester, Dimethylisophthalat, Dimethylterephthalat und Diphenylterephthalat. Die Acylhalogenide sind gekennzeichnet durch die allgemeine Formel RCOX, worin R eine aliphatische, aromatische oder cycloaliphatische Komponente und X Chlor, Brom oder Fluor ist. Beispiele für geeignete Verbindungen sind: Terephthaloyldichlorid, Isophthaloyldichlorid, Malonyldichlorid, Itaconyldichlorid. Copolyester können aus mindestens zwei der obengenannten Dicarbonsäurekomponenten oder Derivaten davon hergestellt werden.

Das bei der Herstellung der neuen haftvermittelnden Polyesterbeschichtungsmassen nach dieser Erfindung verwendete Diol oder Polyoxyalkylenglykol kann ein Poly(alkylenglykol) der allgemeinen Formel

$$H(OCH_2\overset{\overset{R}{|}}{C}H)_nOH$$

sein, worin n eine ganze Zahl von 1 bis 10 ist, oder ein Poly(methylenglykol) der allgemeinen Formel

$$HO(\overset{\overset{R}{|}}{C}H)_mOH$$

worin m eine ganze Zahl von 3 bis etwa 10 ist und R Wasserstoff, Methyl, Ethyl, Phenyl oder Glycidyl ($—CH_2–O–R^1$) bedeutet, wobei $R^1$ Phenyl, Butenyl oder Mischungen daraus bezeichnet.

Beispiele für geeignete Polyoxyalkylenglykole sind die Polyethylen-, Polypropylen- und Polyethylen/Polypropylenglykole. Dazu zählen Diethylen-, Triethylen-, Tetraethylen-, Pentaethylen-, Hexaethylen-, Heptaethylen-, Octaethylen-, Nonaethylen-, Decaethylen-, Dipropylenglykol und Mischungen daraus. Das Poly(oxyalkylenglykol) wird vorzugsweise aus der Gruppe umfassend Diethylenglykol, Triethylenglykol und Mischungen daraus gewählt.

Die Diolkomponente des erfindungsgemässen Polyesters kann aus aliphatischen, cycloaliphatischen und aromatischen Glykolen bestehen. Geeignete Diole (Glykole) sind zum Beispiel: Ethylenglykol, Propylenglykol, 1,3-Propandiol, Neopentylglykol, 2,4-Dimethyl-2-ethylhexan-1,3-diol, 2,2-Dimethyl-1,3-propandiol, 2-Ethyl-2-isobutyl-1,3-propandiol, 1,3-Butandiol, 1,5-Pentandiol, 1,6-Hexandiol, 1,2-Cyclohexandimethanol, 1,3-Cyclohexandimethanol, 1,4-Cyclohexandimethanol, 2,2,4,4-Tetramethyl-1,3-cyclobutandiol, p-Xylylendiol, Catechol, Resorcin und Hydrochinon. Das Poly(methylenglykol) wird vorzugsweise aus der Gruppe umfassend Ethylenglykol, Propylenglykol und 1,4-Butandiol gewählt. Copolymere lassen sich aus mindestens zwei der obengenannten Glykole herstellen.

In US-A-4 098 741 werden die Polyester als Schlichtmassen für das Schlichten von Spinnfaser- und Filamentgarn aus hydrophoben Fasern verwendet. Das US-Patent erwähnt auch die Haftfähigkeit der Phosphor enthaltenden Polyester an Polyesterfolienmaterial.

Die Phosphor enthaltenden Polyester, die in dieser Erfindung als Haftvermittlerbeschichtung für PET verwendet werden sollen, enthalten – bezogen auf die Summe der theoretischen Mol-Prozentanteile aller Bestandteile des Polyesters – bevorzugt etwa 5 bis 15 Mol-% der Phosphor enthaltenden Säurekomponente, etwa 45 bis 35-Mol-% mindestens einer Dicarbonsäurekomponente und als übrigen Bestandteil 50 Mol-% mindestens eines Diols oder Polyoxyalkylenglykols. Die bevorzugten Phosphor enthaltenden Säurekomponenten sind Phosphorsäure, Phosphorpentoxid oder Mischungen aus den beiden. Insbesondere besteht die erfindungsgemässe Haftvermittlerbeschichtung im wesentlichen aus einem Phosphor enthaltenden Polyester, der sich aus den angegebenen Monomeren zusammensetzt.

Bei der Herstellung der Phosphor enthaltenden Poylester-Haftvermittlerbeschichtungen für PET nach US-A-4 098 741 erhält man einen verzweigtkettigen Polyester mit mittlerem Molgewicht, der bei Raumtemperatur in fester Form vorliegt und wiederkehrende Carbonyl-oxyeinheiten und Phosphateinheiten enthält, wobei diese Einheiten als integrale Bestandteile der Polymerkette aufzufassen sind. Unter dem Begriff «integralter Bestandteil einer Kette» ist zu verstehen, dass derartige Einheiten selbst Glieder einer Kette darstellen und nicht etwa nur von aussen mit einzelnen Gliedern einer bereits bestehenden, z.B. Kohlenstoffkette, verknüpft sind. Solche Polyester werden im allgemeinen in Form einer freien Säure hergestellt und sind als solche verwendbar oder lassen sich durch Neutralisation oder teilweise Neutralisation der freien Säure mit einer basischen Substanz, z.B. einem Alkalicarbonat, Alkalihydroxid, Ammoniak oder einem Amin, leicht zu in Wasser dispergierbaren oder sogar löslichen zur Feuchtigkeitsaufnahme befähigten Stoffen umwandeln.

Die Massen werden so hergestellt, dass man eine Carbonsäurezahl von vorzugsweise etwa 5 bis 15, insbesondere von etwa 8 bis 12, erhält. Bei Anwendung der Formel aus Spalte 5, Zeilen 3 bis 11, von US-A-4 098 741 entspricht ein Säurezahlenbereich von etwa 5 bis 15 einem Molgewichtsbereich von etwa 4 000 bis 11 000.

Wie oben angegeben wird die erfindungsgemässe Haftvermittlerbeschichtung als wässrige Dispersion mit einem Feststoffgehalt im Bereich von etwa 0,5 bis 15 Gew.-%, vorzugsweise von etwa 2 bis 10 Gew.-%, auf die Basispolyesterfolie aufgebracht. Das Beschichtungsgewicht liegt vorzugsweise im Bereich von 0,0098 g/m$^2$ bis 0,059 g/m$^2$, insbesondere von 0,023 g/m$^2$ bis 0,031 g/m$^2$, wobei das angestrebte Gewicht 0,026 g/m$^2$ beträgt. Es ist zu beachten, dass die oberen Grenzen für den Bereich des Beschichtungsgewichts nicht als zwingend gelten. Der einzige Nachteil höherer Beschichtungsgewichte liegt in den verhältnismässig hohen Kosten für die Beschichtung.

Die Beschichtung kann auf eine oder beide Seiten der Folie aufgetragen werden. Sie kann auch auf eine Folienseite aufgebracht werden, während sich auf der Gegenseite eine andere Beschichtung befindet, z.B. eine vernetzbare Acryl- oder Methacrylbeschichtung wie in US-A-4 214 035 beschrieben. In einigen Fällen kann es sich empfehlen, dem Ansatz der Copolyesterbeschichtung ein Härtungsmittel zuzusetzen, beispielsweise etwa 1 bis 20 Gew.-% eines Melamin- oder Harnstoff-Formaldehyd-Kondensationsproduktes, um auf diese Weise die Eigenschaften der Haftvermittlerbeschichtung weiter zu verändern. Der Beschichtungsansatz kann ausserdem auch noch andere bekannte Bestandteile enthalten wie z.B. Antistatika, Netzmittel, Tenside, pH-Regulatoren, Antioxidantien, Farbstoffe, Pigmente und Gleitmittel, z.B. kolloidales $SiO_2$.

Die erfindungsgemässen Haftvermittlerbeschichtungen haben eine ausgezeichnete Wärmestabilität, und aus diesem Grund können die bei der Produktion anfallenden Abfälle der beschichteten Folie, mit frischem Polyestergranulat vermischt, erneut geschmolzen und zur Herstellung von orientierter Folie wieder dem Extruder zugeführt werden. Bei einer so hergestellten Folie, die erhebliche Mengen an Regenerat aus beschichtetem Abfall enthält, erweisen sich Qualität, Farbe und Aussehen als gut bei sehr geringfügiger wahrnehmbarer Herabminderung der Eigenschaften aufgrund einer Verunreinigung durch die Beschichtung. Gegenüber vielen anderen beschichteten Folien, z.B. Folien mit einer Haftvermittlerbeschichtung aus vinylidenchloridhaltigen Polymeren, gemäss US-A-2 627 088 und US-A-2 698 240, die zum Abbau und zur Verfärbung neigen, wenn sie wie oben beschrieben zurückgewonnen werden, bietet die erfindungsgemässe Folie mit Haftvermittlerbeschichtung dem Folienhersteller also einen wirtschaftlichen Vorteil.

Die erfindungsgemässe Folie mit Haftvermittlerbeschichtung wird hauptsächlich als Verpakkungs- oder Etikettierungsmaterial verwendet. Im Vergleich zu unbeschichteten Folien zeigen die mit einer Haftvermittlerbeschichtung versehenen Folien eine verbesserte Haftung gegenüber Flexodruck- und Tiefdruckfarben auf Basis von Wasser und organischen Lösemitteln. Solche Druckfarben können aus Farbstoffen, gegebenenfalls in Verbindung mit löslichen Harzen und Eindickungsmitteln, bestehen, die in einem wässrig-alkoholischen Medium oder in einem organischen Lösemittel dispergiert oder gelöst sind.

Wenn die beschichtete Folie mit laminierfähigen Druckfarben bedruckt wird, kann sie extrusionsbeschichtet oder klebstoffkaschiert werden. Das resultierende Laminat weist eine ausgezeichnete Bindefestigkeit, sowohl in den mit Druckfarbe versehenen Bereichen als auch in den Bereichen ohne Druckfarbe, auf.

Durch die folgenden Beispiele soll die Erfindung näher erläutert, jedoch nicht auf diese Beispiele beschränkt werden.

An jeder der mit einer Haftvermittlerbeschichtung versehenen Folien aus den folgenden Beispielen wurde die Druckfarbenhaftung bewertet. Die Versuche wurden so durchgeführt, dass die Druckfarben nach einem Aufstreichverfahren mit einem Spiralschaber (Mayer Rod Nr. 6)® auf Abschnitte der Folienproben aufgetragen und anschliessend mindestens 1 Minute bei 60 °C im Ofen getrocknet wurden. Ein Stück Klebeband (Scotch Brand No. 610)® wurde auf die getrocknete eingefärbte Oberfläche aufgedrückt, mit dem Finger fest angerieben und dann rasch von der Folie abgezogen. Die in dem Bereich unter dem Klebeband zurückbleibende Menge an Druckfarbe wurde dann als Prozentanteil dieses Bereichs ausgedrückt, d.h. keine Druckfarbe entfernt = 100% Haftung, sämtliche Druckfarbe entfernt = 0% Haftung. Die dazwischenliegenden Haftungswerte wurden als die jeweils auf der Folie zurückbleibende Menge an Druckfarbe ermittelt.

## Beispiel 1

Nach dem in US-A-4 098 741 beschriebenen Verfahren wurde das Ammoniumsalz eines Polyesters auf wässriger Basis, bestehend aus Diethylenglykol, Phosphorsäure und Isophthalsäure, hergestellt. Mit diesem Polyester wurde eine 12 µm dicke Polyesterfolie zwischen den Streckschritten, d.h. nach dem Längs- und vor dem Querstrecken, bei einem Feststoffgehalt der Beschichtung von 3,8% beschichtet. Das tatsächliche Gewicht des Polyesters wurde mit 0,026 g an trockener Polymerfestsubstanz/m$^2$ errechnet. Die Haftung von zwei Druckfarben auf wässriger Basis und vier Druckfarben auf Lösemittelbasis auf den vorbereiteten beschichteten Folienproben ist in Tabelle 1 angegeben. Alle verwendeten Druckfarben waren im Handel erhältliche Produkte, und der Prozentwert der Druckfarbenhaftung wurde an von Hand mit einem Meyer Rod Nr. 6® aufgestrichenen Farbproben und einem Test mit Scotch Tape Nr. 610® wie oben beschrieben ermittelt. Die Druckfarben waren von folgenden Herstellern bezogen worden: Inmont Corporation, Charlotte, North Carolina; Custom Printing Inks, Ltd. (CPI), San Diego, California; General Printing Inks Division der Firma Sun Chemical Corporation (GPI), Northlake, Illinois; und Consolidated Printing Inks Division der Firma Sinclair & Valentine (S & V), West St. Paul, Minnesota.

Tabelle 1
Druckfarbenhaftung in %

| Folienproben | % Festsubstanz | Inmont R 28722 (Aquabond "S" White)® | CPI R-1094 (Water Red)® | GPI P 80–4589 (Sunester White)® | Inmont 79 CR 541 (Wonderflex Process Blue)® | S & V DR 2660 (Sinva Prop Red)® | S & V ATC 58766 (Sinva Prop White)® |
|---|---|---|---|---|---|---|---|
| unbeschichtete Probe | | 85 | 10 | 50 | 65 | 95 | 90 |
| beschichtete Probe | 3,8 | 95 | 5 | 100 | 95 | 100 | 80 |

Beispiel 2

Da in der Packmittel verarbeitenden Industrie Flexodruck- und Tiefdruckfarben mit so vielen unterschiedlichen Rezepturen in Gebrauch sind, wurde es notwendig, mehrere als Standard verwendbare Druckfarben herauszugreifen. Es wurden vier verschiedene Trägermedien für Druckfarben hergestellt, welche die für die Verpackung mit flexiblen Folien verwendeten Druckfarbentypen repräsentieren sollen. Die Druckfarbenträgermedien wurden mit einer geringen Menge Rhodamin B-Farbstoff (1% Rhodamin B in n-Butanol) in verschiedenen Rosatönen angefärbt, um die Beobachtung beim Hafttest zu erleichtern. Der Polyamidfarbträger war ein Trägermedium auf alkoholischer Basis und enthielt Unirez 2215® von der Firma Union Camp Corporation, Wayne, New Jersey. Das zweite Trägermedium wurde mit *1/4" RS (entsprechend Normtyp E 27) Nitrocellulose und das dritte mit *1/4" SS (entsprechend Normtyp A 27) Nitrocellulose hergestellt. Bei dem vierten Trägermedium handelte es sich um ein Acrylharz zur Verwendung von Flexodruckfarben auf wässriger Basis (Wasser-Flexo), nämlich um Joncryl 67® von der Firma S.C. Johnson & Son, Inc., Racine, Wisconsin. Alle vier Druckfarben wurden auf Folienproben aufgebracht, die wie in Beispiel 1 (d.h. nach US-A-4 098 741) hergestellt worden waren. Die Farbproben wurden von Hand mit einem Meyer Rod Nr. 6® aufgestrichen, getrocknet und dann mit Scotch Tape Nr. 610® auf ihre Haftung geprüft. Die Ergebnisse sind der Tabelle 2 zu entnehmen.

*" = Zoll = 2,54 cm

Tabelle 2
Haftung des Druckfarbenträgermediums in %
(Zusatz von Rhodamin B)

| Folienprobe | Polyamid | * 1/4" RS Nitro | * 1/4" SS Nitro | Wasser-Flexo |
|---|---|---|---|---|
| unbeschichtete Probe | 100 | 0 | 0 | 0 |
| beschichtete Probe | 100 | 100 | 100 | 99 |

*"=Zoll =2,54 cm

Beispiel 3

Die erfindungsgemässe Folie mit Haftvermittlerbeschichtung wurde wie in Beispiel 1 (d.h. nach US-A-4 098 741) hergestellt und bei verschiedenen Prozentanteilen an Festsubstanz, die unterschiedlichen Dicken entsprechen, geprüft. Die geprüften Druckfarben wurden aus den gleichen Trägermedien wie in Beispiel 2 hergestellt. Das Prüfverfahren entsprach den Beispielen 1 und 2, und die Ergebnisse sind in der Tabelle 3 aufgeführt.

Tabelle 3
Druckfarben in %

| Folienprobe (% Festsubstanz) | 1/4" RS Nitro | 1/4" SS Nitro | Polyamide | Wasser-Flexo |
|---|---|---|---|---|
| unbeschichtete Probe | 5 | 30 | 20 | 5 |
| beschichtete Probe (0,05%) | 15 | 45 | 15 | 10 |
| beschichtet (0,1%) | 15 | 60 | 20 | 10 |

Tabelle 3 (Fortsetzung)

| Folienprobe (% Festsubstanz) | 1/4" RS Nitro | 1/4" SS Nitro | Polyamide | Wasser-Flexo |
|---|---|---|---|---|
| beschichtet (0,2%) | 20 | 50 | 50 | 5 |
| beschichtet (0,5%) | 10 | 50 | 100 | 0 |
| beschichtet (1,0%) | 75 | 65 | 100 | 95 |
| beschichtet (2,0%) | 10 | 25 | 100 | 95 |
| beschichtet (4,0%) | 50 | 75 | 100 | 50 |

Beispiel 4

Die erfindungsgemässe Haftvermittlerbeschichtung wurde wie in Beispiel 1 (d.h. nach US-A-4 098 741) hergestellt, wobei eine geringe Menge an kolloidalem $SiO_2$ als Gleitmittel zugesetzt wurde. Dieser Polyester wurde zwischen den Streckschritten auf eine 12 µm dicke PET-Folie vom Typ 2000 aufgebracht. Um die Bindefestigkeit der haftvermittelnd beschichteten Folie nach dem Laminieren mit Polyethylen unter Verwendung verschiedener Klebstoffe zu prüfen, wurden 1*Zoll breite Streifen geschnitten und an diesen Streifen ein Doppel-90°-Schälversuch (T-Peel-Test) in einem «Instron»-Zug-Dehnungs-Apparat durchgeführt. Bei einem Doppel-90°-Schälversuch werden die Polyester- und Polyethylenfolien an einem Ende des Streifens von Hand voneinander getrennt. Die (auseinandergezogenen) Enden werden in die Einspannklemmen des «Instron»-Apparates eingespannt und die Trennfestigkeit in g*Zoll Breite gemessen. Das hintere Ende des Laminats wird dabei im Winkel von 90° gehalten, während die Schichten mit einer Zuggeschwindigkeit von 12 *Zoll/Minute auseinandergezogen werden.

Die in diesem Beispiel verwendeten Proben waren nicht bedruckt. Als Klebstoff wurden verwendet: Ixan®, Hersteller Solvay Cie. S.A., Brüssel, Belgien; Lamal HSA®, Hersteller Polymer Industries, Grennville, South Carolina, USA; und ein Klebstoff von Henkel, Düsseldorf, BRD. Die Ergebnisse sind in der Tabelle 4 angegeben.

*1 Zoll = 2,54 cm.

Tabelle 4

| Verwendeter Klebstoff | Bindefestigkeit (g/Zoll* Breite) |
|---|---|
| Ixan® | 232 |
| Lamal HSA® | 422 |
| Henkel | Riss[1] |

[1] Probe zerriss beim Delaminierversuch

Beispiel 5

Entsprechend Beispiel 4 wurde eine PET-Folie mit Haftvermittlerbeschichtung hergestellt. Die Folie wurde dann entweder mit Druckfarbe auf Basis von Nitrocellulose (Nit.) oder mit Druckfarbe auf Basis von mit Acrylharz modifizierter Nitrocellulose (Acr.) im Flexodruck- (Flexo) oder Tiefdruckverfahren (Grav.) bedruckt. Einige der Proben wurden mit Polyethylen (Adcote 333®, Hersteller Morton Chemical, Chicago, Illinois (USA) extrusionsbeschichtet, und andere wurden auf Polyethylen klebstoffkaschiert, wobei als Klebstoffe entweder Lamal HSA oder der Kleber von Henkel verwendet wurden. Die Proben wurden anschliessend auf ihre Bindefestigkeit geprüft. Die Ergebnisse sind in Tabelle 5 enthalten.

*1 Zoll = 2,54 cm

Tabelle 5

| Druckverfahren | Druckfarbe | Klebstoff | Bindefestigkeit (g/Zoll*) |
|---|---|---|---|
| Flexo | Nit. | Adcote® | Riss[1] |
| Flexo | Nit. | Lamal HSA® | kein Auslösen[2] |
| Flexo | Nit. | Henkel | kein Auslösen[2] |
| Flexo | Acr. | Adcote® | 341 |
| Flexo | Acr. | Lamal HSA® | Riss[1] |
| Flexo | Acr. | Henkel | Riss[1] |
| Grav. | Nit. | Lamal HSA® | kein Auslösen[2] |

[1] Probe zerriss beim Delaminierversuch

[2] Bindefestigkeit war so gut, dass Delaminieren nicht ausgelöst werden konnte.

Aus den Tabellen ist ersichtlich, dass die hier beschriebene Folie mit Haftvermittlerbeschichtung aus Phosphor enthaltenden Polyestern, verglichen mit unbeschichteter PET-Folie, eine erheblich verbesserte Haftung gegenüber Druckfarben aufwies. Darüber hinaus zeigte die beschriebene Folie mit Haftvermittlerbeschichtung aus Phosphor enthaltenden Polyestern eine ausgezeichnete Bindefestigkeit.

*1 Zoll = 2,54 cm

**Patentansprüche**

1. Orientierte selbsttragende Folie aus einem ersten thermoplastischen Polyester mit einer ein- oder beidseitig aufgebrachten Haftvermittlerschicht, bei der die Haftvermittlerschicht eine Schichtdicke aufweist entsprechend einem Trokkengewicht im Bereich zwischen 0,0098 und 0,059 g/$m^2$, dadurch gekennzeichnet, dass die Haftvermittlerschicht einen zweiten Polyester enthält, der ein Kondensationsprodukt ist aus:

a) einer dicarboxylischen Reaktionskomponente bestehend aus Isophthalsäure, oder einem ihrer Alkylester, oder Säurehalogenid und/oder Mischungen von diesen oder der genannten dicarboxylischen Reaktionskomponente mit einer weiteren Zumischung von bis zu gleichen molaren Anteilen von

i) mindestens einer aliphatischen Dicarbonsäure oder einem dazu korrespondierenden Säureanhydrid oder einem Alkylester oder einem Säurehalogenid und/oder Mischungen von diesen oder

ii) mindestens einer anderen aromatischen Dicarbonsäure, einem dazu korrespondierenden Säureanhydrid oder Alkylester Säurehalogenid und/oder Mischungen von diesen oder

iii) Mischungen aus i) und ii) und

b) mindestens einem Glykol oder Polyoxyalkylenglykol und

c) einer Phosphor enthaltenden sauren Reaktionskomponente,

und dass der zweite Polyester fest ist, eine verzweigte Struktur aufweist und wiederkehrende Carbonyl-oxyeinheiten und Phosphateinheiten enthält, wobei jede der genannten Einheiten einen integralen Bestandteil der Kette des zweiten Polyesters bildet.

2. Folie nach Anspruch 1, dadurch gekennzeichnet, dass der zweite Polyester eine Carbonsäurezahl von 5 bis 15 aufweist und ein Molekulargewicht von 4 000 bis 11 000.

3. Folie nach Anspruch 1 oder 2, dadurch gekennzeichnet, dass in dem zweiten Polyester die dicarboxylische Reaktionskomponente a) in einer Menge von 35 bis 45 Mol-% vorliegt, die Glykol- oder Polyoxyalkylenglykolkomponente b) in einer Menge von 50 Mol-% und die Phosphor enthaltende Reaktionskomponente c) in einer Menge von 5 bis 15 Mol-%, jeweils bezogen auf die Molsumme aller den zweiten Polyester bildenden Bausteine.

4. Folie nach einem der Ansprüche 1 bis 3, dadurch gekennzeichnet, dass die Phosphor enthaltende Reaktionskomponente c) ausgewählt ist aus der Gruppe, bestehend aus Phosphorsäure, Phosphorpentoxid oder Mischungen daraus.

5. Folie nach einem der Ansprüche 1 bis 4, dadurch gekennzeichnet, dass die orientierte selbsttragende Polyesterfolie eine biaxial orientierte Polyethylenterephthalatfolie ist.

6. Folie nach einem der Ansprüche 1 bis 5, dadurch gekennzeichnet, dass die dicarboxylische Reaktionskomponente a) des zweiten Polyesters Isophthalsäure ist.

7. Verfahren zur Herstellung einer beschichteten Folie nach einem der Ansprüche 1 bis 6, bei dem durch Schmelzextrusion eine im wesentlichen amorphe Folie hergestellt wird, die anschliessend durch Streckung in eine oder in zwei Richtungen orientiert und danach hitzefixiert wird, dadurch gekennzeichnet, dass die Haftvermittlerschicht auf die Trägerfolie als eine wässrige Dispersion vor der Streckung in eine Richtung oder nach der Streckung in einer Richtung, aufgebracht wird.

8. Verfahren nach Anspruch 7, dadurch gekennzeichnet, dass die Haftvermittlerschicht als wässrige Dispersion mit einem Feststoffgehalt von 0,5 bis 15 Gew.-%, bevorzugt von 2 bis 10 Gew.-%, aufgebracht wird.

9. Verfahren nach Anspruch 7 oder 8, dadurch gekennzeichnet, dass die Trägerfolie vor dem Auftragen der Haftvermittlerschicht einer Coronabehandlung unterzogen wird.

**Claims**

1. Oriented self-supporting film comprised of a first thermoplastic polyester provided with a primer coating on one or both sides thereof, said primer coating having a thickness corresponding to a dry coating weight within the range of 0.0098 to 0,059 g/$m^2$, characterized in that said primer coating comprises a second polyester comprising the condensation product of:

a) a dicarboxylic reactant consisting of isophthalic acid or an alkyl ester thereof or an acid halide and/or mixtures thereof or of said dicarboxylic reactant in admixture with up to equal parts, on a molar basis, of

i) at least one aliphatic dicarboxylic acid or a corresponding acid anhydride or alkyl ester or acid halide and/or mixtures thereof or

ii) at least one other aromatic dicarboxylic acid, a corresponding acid anhydride, alkyl ester or acid halide and/or mixtures thereof or

iii) mixtures of i) and ii) and

b) at least one glycol or polyoxyalkylene glycol, and

c) a phosphorus-containing acidic reactant,

and in that said second polyester is solid, has a branched structure, and contains repeating carbonyl-oxy units and phosphate units whereby each of said units is an integral part of the chain of said second polyester.

2. The film of Claim 1 wherein said second polyester has a carboxylic acid number of 5 to 15 and a molecular weight of 4,000 to about 11,000.

3. The film of Claim 1 or 2 wherein said dicarboxylic reactant a) is present in said second polyester in the proportion of 35 to 45 mole percent; said glycol or polyoxyalkylene glycol reactant b) is present in the proportion of 50 mole percent; and said phosphorus-containing reactant c) is present in the proportion of 5 to 15 mole percent, each time relative to the totality of the components constituting said second polyester.

4. The film of any of Claims 1 to 3 wherein said phosphorus-containing acid reactant is selected from the group consisting of phosphoric acid, phosphorus pentoxide and mixtures thereof.

5. The film of any of Claims 1 to 4 wherein said oriented self-supporting polyester film is a biaxially oriented polyethylene terephthalate film.

6. The film of any of Claims 1 to 5 wherein said dicarboxylic reactant a) of said second polyester is isophthalic acid.

7. Process for the preparation of a coated film as claimed in any of Claims 1 to 6, comprising melt-extruding a substantially amorphous polyester film and thereafter orienting the film by stretching in one or two directions and heatsetting the film, characterized in that said primer coating is applied to said carrier film as an aqueous dispersion prior to stretching in one direction, or subsequent to stretching in one direction but prior to stretching in the second direction.

8. The process of Claim 7 wherein said primer coating is applied as an aqueous dispersion having a solids content of 0.5 to 15 weight percent, preferably of 2 to 10 weight percent.

9. The process of Claim 7 or 8 wherein said carrier film is subjected to a corona discharge treatment prior to the application of said primer coating.

**Revendications**

1. Feuille autoportante orientée constituée d'un premier polyester thermoplastique et d'une couche d'agent d'adhérence appliquée d'un seul côté ou des deux côtés, la couche d'agent d'adhérence ayant une épaisseur qui correspond à un poids sec compris entre 0,0098 et 0,059 g/m$^2$, caractérisé en ce que la couche d'agent d'adhérence contient un deuxième polyester, qui est un produit de condensation de:

a) une composante réactionnelle dicarboxylique constituée l'acide isophthalique ou d'un de ses esters alkyliques ou de son halogénure d'acide et/ou de mélanges de ceux-ci, ou de la composante réactionnelle dicarboxylique indiquée avec en outre en mélange avec des quantités pouvant aller jusqu'à l'égalité molaire de

i) au moins un diacide carboxylique aliphatique ou un anhydride d'acide ou un ester alkylique ou un halogénure d'acyle correspondant à celui-ci et/ou des mélanges de ceux-ci ou

ii) au moins un autre diacide carboxylique aromatique, un anhydride d'acide ou un ester alkylique ou un halogénure d'acyle correspondant à celui-ci et/ou des mélanges de ceux-ci

iii) des mélanges de i) et ii) et

b) au moins un glycol ou un polyoxyalkylèneglycol et

c) une composante de réaction acide contenant du phosphore,

et en ce que le deuxième polyester est solide, présente une structure ramifiée et comporte des motifs carbonyloxy et phosphate répétés, chacun des motifs indiqués faisant partie intégrale de la chaîne du deuxième polyester.

2. Feuille selon la revendication 1, caractérisée en ce que le deuxième polyester présente un indice d'acide carboxylique de 5 à 15 et un poids moléculaire de 4000 à 11 000.

3. Feuille selon la revendication 1 ou 2, caractérisée en ce que dans le deuxième polyester, la composante de réaction dicarboxylique a) se trouve en quantité de 35 à 45 moles/%, la composante glycol ou polyoxyalkylèneglycol b) se trouve en quantité de 50 moles/% et la composante de réaction contenant du phosphore c) se trouve en quantité de 5 à 15 moles/%, par rapport dans chaque cas à la somme molaire de tous les éléments formant le deuxième polyester.

4. Feuille selon l'une des revendications 1 à 3, caractérisée en ce que la composante réactionnelle contenant du phosphore c) est choisie parmi l'acide phosphorique, l'anhydride phosphorique ou les mélanges de ceux-ci.

5. Feuille selon l'une des revendications 1 à 4, caractérisée en ce que la feuille de polyester autoportante orientée est une feuille de polyéthylènetéréphthalate orientée biaxialement.

6. Feuille selon l'une des revendications 1 à 5, caractérisée en ce que la composante de réaction dicarboxylique a) du deuxième polyester est l'acide isophthalique.

7. Procédé de fabrication d'une feuille enduite selon l'une des revendications 1 à 6 suivant lequel on fabrique, par extrusion d'une masse fondue, une feuille essentiellement amorphe qui ensuite est orientée par étirage dans une ou deux directions et ensuite fixée par traitement thermique, caractérisé en ce que la couche d'agent d'adhérence est appliquée sur la feuille support sous forme d'une dispersion aqueuse avant l'étirage dans une direction ou après l'étirage dans une direction mais avant l'étirage dans la deuxième direction.

8. Procédé selon la revendication 7, caractérisé en ce que la couche d'agent d'adhérence est appliquée sous forme d'une dispersion aqueuse ayant une teneur en solide de 0,5 à 15% en poids, de préférence de 2 à 10% en poids.

9. Procédé selon la revendication 7 ou 8, caractérisé en ce que la feuille support est soumise à un traitement par effet corona avant l'application de la couche d'agent d'adhérence.